# EUROPEAN PATENT APPLICATION

(11) **EP 4 191 197 A1**
(43) Date of publication of application: **07.06.2023**
(21) Application number: 22211516.4
(22) Date of filing: 05.12.2022
(51) Int. Cl.: G01C 11/02, G01C 15/00, G01C 21/00, A01F 15/08, G01S 17/89

(54) **HIGH VANTAGE POINT BALE LOCATOR**

(30) Priority: 06.12.2021 US 202117457683
(71) Applicant: CNH Industrial Belgium NV, 8210 Zedelgem (BE)
(72) Inventor: COOLEY, Devin, Shellington, 19607 (US)
(74) Representative: CNH Industrial IP Department

(57) **Abstract**

An agricultural bale detection system (102) includes: a sensor apparatus (103) being land-based and including a base (105) and at least one sensor (109, 110, 111) coupled with the base (105), wherein the base (105) is configured for being temporarily placed in a stationary position when the at least one sensor (109, 110, 111) is operating, the at least one sensor (109, 110, 111) being configured for: detecting an operative parameter of at least one object (101) in a field (100), the operative parameter being associated with a location of the object (101) in the field (100); outputting an operative parameter signal corresponding to the operative parameter; and a controller (104, 114) operatively coupled with the at least one sensor (109, 110, 111) and configured for: receiving the operative parameter signal; and determining a position of the object (100) based at least in part on the operative parameter signal.

## Description

### FIELD OF THE INVENTION

The present invention pertains to agricultural systems, and, more specifically, to an agricultural bale locator.

### BACKGROUND OF THE INVENTION

Agricultural harvesting machines, such as agricultural balers (which can be referred to as balers), have been used to consolidate and package crop material (which, depending upon the application, can also be referred to as forage, forage material, or forage crop material) so as to facilitate the storage and handling of the crop material for later use. Often, a mower-conditioner cuts and conditions the crop material for swath or windrow drying in the sun. When the cut crop material is properly dried (depending upon the application), an agricultural harvesting machine, such as an agricultural baler, travels along the swath or windrows (hereinafter, collectively referred to as windrows, unless otherwise specified) to pick up the crop material. Upon picking up the crop material, the baler compacts and shapes the crop material into a bale in a bale chamber of the baler and then ejects the formed bale, often, onto the ground of the field. Frequently, the bales left in the field are retrieved later, to be stacked, stored, and/or transported. Balers come in different types, such as round balers, large square balers, and small square balers, which - as is well-known in the art - form cylindrically-shaped round bales, large generally rectangular bales, and small generally rectangular bales, respectively.

A problem exists in terms of knowing where the bales are located in the field for subsequent retrieval. Known is a bale locating device onboard a moving agricultural machine traveling across the ground, the bale locating device being used during a bale retrieval operation to recognize and to locate the bale as the machinery approaches the bale. This way of locating a bale in the field is complex and costly.

What is needed in the art is an improved way of locating a bale in a field that is not as complex and is less expensive.

### SUMMARY OF THE INVENTION

The present invention provides an agricultural bale detection system that includes a sensor apparatus that can be used before a bale retrieval operation.

The invention in one form is directed to a sensor apparatus of an agricultural bale detection system, the sensor apparatus including: a base; and at least one sensor coupled with the base, the sensor apparatus being land-based, the base being configured for being temporarily placed in a stationary position when the at least one sensor is operating, the at least one sensor being configured for: detecting an operative parameter of at least one object in a field, the operative parameter being associated with a location of the object in the field; and outputting an operative parameter signal corresponding to the operative parameter, such that a controller, which is operatively coupled with the at least one sensor, receives the operative parameter signal and determines a position of the object based at least in part on the operative parameter signal.

The invention in another form is directed to an agricultural bale detection system includes: a sensor apparatus being land-based and including a base and at least one sensor coupled with the base, the base being configured for being temporarily placed in a stationary position when the at least one sensor is operating, the at least one sensor being configured for: detecting an operative parameter of at least one object in a field, the operative parameter being associated with a location of the object in the field; outputting an operative parameter signal corresponding to the operative parameter; and a controller operatively coupled with the at least one sensor and configured for: receiving the operative parameter signal; and determining a position of the object based at least in part on the operative parameter signal.

The invention in yet another form is directed to a method of using an agricultural bale detection system, the method including the steps of: providing a sensor apparatus and a controller, the sensor apparatus being land-based and including a base and at least one sensor coupled with the base, the controller being operatively coupled with the at least one sensor; placing temporarily the base of the sensor apparatus in a stationary position when the at least one sensor is operating; detecting, by the at least one sensor, an operative parameter of at least one object in a field, the operative parameter being associated with a location of the object in the field; outputting, by the at least one sensor, an operative parameter signal corresponding to the operative parameter; receiving, by the controller, the operative parameter signal; and determining, by the controller, a position of the object based at least in part on the operative parameter signal.

An advantage of the present invention is that it provides a less complex and a less expensive way to locate bales of crop material for bale retrieval.

Another advantage is that it provides a bale locating device that is separate from any agricultural machine used to retrieve the bales. Thus, the bale locating device is not used onboard an agricultural machine used during the bale retrieval operation, such as a tractor or bale retrieval vehicle. The present invention would thus enable the required technology for the autonomous retrieval of bales to be less complex and to provide for a reduction in cost.

### BRIEF DESCRIPTION OF THE DRAWINGS

For the purpose of illustration, there are shown in the drawings certain embodiments of the present invention. It should be understood, however, that the invention is not limited to the precise arrangements, dimensions, and instruments shown. Like numerals indicate like elements throughout the drawings. In the drawings:
FIG. 1 illustrates a schematic top view of an embodiment of an agricultural bale detection system including a sensor apparatus and a controller, the sensor apparatus being positioned in a field with bales of crop material lying thereon, in accordance with an exemplary embodiment of the present invention;
FIG. 2 illustrates a schematic side view of the sensor apparatus of FIG. 1, as well as a bale of crop material of FIG. 1, in accordance with an exemplary embodiment of the present invention;
FIG. 3 illustrates a schematic top view of the sensor apparatus of FIG. 1, as well as the bale of crop material of FIG. 2, in accordance with an exemplary embodiment of the present invention;
FIG. 4 illustrates a schematic diagram of a control system of the agricultural bale detection system of FIG. 1, in accordance with an exemplary embodiment of the present invention; and
FIG. 5 illustrates a flow diagram showing a method of using the agricultural bale detection system, in accordance with an exemplary embodiment of the present invention.

### DETAILED DESCRIPTION OF THE INVENTION

To the extent that an agricultural machine is referenced herein, the terms "forward", "rearward", "left" and "right", when used in connection with the agricultural machine, and/or components thereof are usually determined with reference to the direction of forward operative travel of the agricultural machine, but they should not be construed as limiting. The terms "longitudinal" and "transverse" are determined with reference to the fore-and-aft direction of the agricultural machine and are equally not to be construed as limiting. The terms "downstream" and "upstream" are determined with reference to the intended direction of crop material flow during operation, with "downstream" being analogous to "rearward" and "upstream" being analogous to "forward."

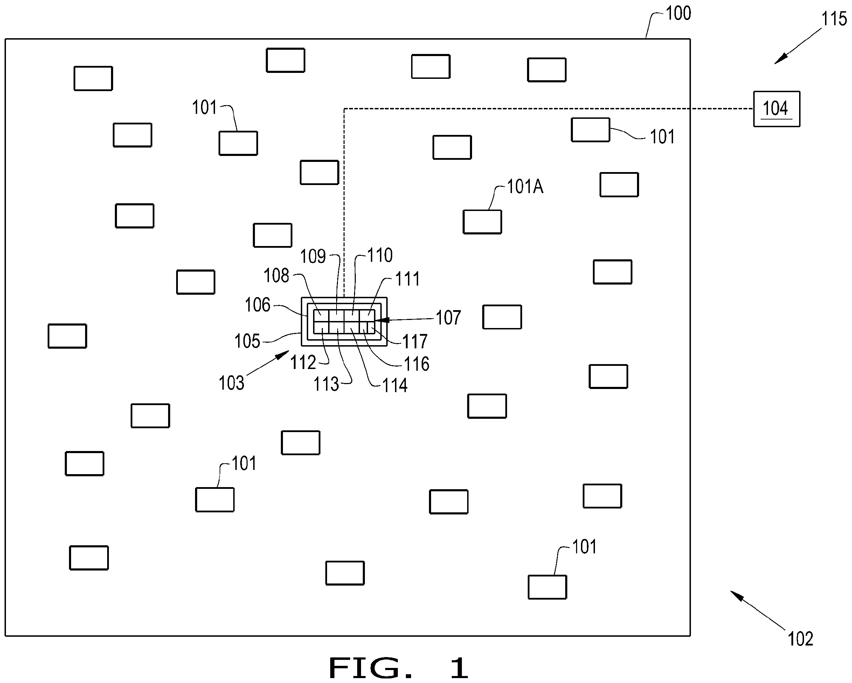

Referring now to the drawings, and more particularly to FIG. 1, there is shown an embodiment of an agricultural field 100 including a plurality of bales 101 of crop material. FIG. 1 shows several such bales 101 in field 100, each bale 101 being shown as having a rectangular from an overhead view in FIG. 1; bales 101 are assumed to be round bales, though square bales (or bales of any shape or size) are within the scope of the present invention as well. The bales in field 100 are generically numbered 101; one such bale, however, is representative for all of the bales 101 in field 100 for analytical purposes and thus has the reference number of 101A.

According to a typical scenario, bales 101 are placed in their positions on field 100, as in FIG. 1, during a prior baling operation performed by an agricultural baler. Prior to the baling operation, the crop material is planted, grown, and cut. As is often the case, the crop material can be cut and conditioned using a mower-conditioner machine and laid back onto the ground by the mower-conditioner machine in a respective swath or windrow (swaths and windrows are referenced herein collectively as windrows, unless otherwise noted). After this mowing-conditioning operation, subsequent operations prior to the baling operation can be performed, such as tedding, merging, and/or raking of the crop material lying on the ground, in order to obtain, for instance, an optimal moisture content of the crop material, depending upon the desired application of the crop material. Regardless of the prior harvesting operations that have been performed, the crop material in FIG. 1 is now in bales 101 throughout field 100 and are to be retrieved from field 101 for subsequent stacking, storage, and/or transporting to an intermediate and/or final destination (alternatively, a user may need to know the location of bales 101 in field 100 for other purposes unrelated to bale retrieval). The retrieval of bales 101 could be performed non-autonomously or autonomously. If autonomously, then the bale retriever (that is, a bale retrieving machine) must be informed of the position of bales 101 in field 100. This positional information of bales 101 in field 100 is obtained in accordance with the present invention, though the present invention is not limited in scope to subsequent autonomous bale retrieving operations. Further, the present invention can be used with virtually any field that is used for baling crop material. Thus, field 100 does not have to be completely flat or level terrain but can have terrain that is sloped and/or undulating, to the extent that an agricultural baler can bale the crop material; the sensor technology of the present invention can be used with any such terrain.

Further, FIG. 1 shows that an agricultural bale detection system 102 includes a sensor apparatus 103 and a control system 115. Agricultural bale detection system 102 is configured for determining a position of each bale 101 in field 100, and doing so after a baling operation and before a bale retrieving operation in field 100. Sensor apparatus 103 is configured for performing a bale detection operation and is not part of, and thus not mounted to or otherwise on board of, a bale retrieving machine or a work vehicle, such as a tractor, used in a bale retrieving operation. Rather, sensor apparatus 103 is used before the bale retrieving operation commences. In this way, using sensor apparatus 103, a position of the various bales 101 in field 100 can be known prior to commencing the bale retrieving operation (performed, for example, by an autonomous bale retrieving machine). According to a first embodiment of the agricultural bale detection system 102 of the present invention (this is the embodiment described herein, unless otherwise noted), sensor apparatus 103 is a stand-alone device that is set up by a user in a field and taken down when the bale detection operation of sensor apparatus 103 is completed. According to an alternative embodiment of the agricultural bale detection system of the present invention, the sensor apparatus of the present invention can be mounted to, or otherwise coupled with, or form a part of, a mobile vehicle (not shown) which can traverse field 100, halt in field 100, and allow the sensor apparatus to perform its bale detection operation in field 100. According to another alternative embodiment of the agricultural bale detection system of the present invention, the sensor apparatus of the present invention can be an autonomous device that can be programmed, or otherwise learn, to travel into field 100, perform its bale detection operation, and exit the field 100.

FIG. 1 shows sensor apparatus 103 schematically relative to bales 101 in field 100. Because sensor apparatus 103 is shown schematically, sensor apparatus 103 is shown as being larger than bales 101, although this is not necessarily the case in actual design. In actual design, sensor apparatus 103 can be as small or as large as is suitable to accomplish its primary functions of detecting a location of, and taking images of, bales 101 in field 100. Noted, however, is that sensor apparatus 103 can detect objects 101 in field 100, which can be referred to as objects 101 or as apparent bales 101, if they have not yet been confirmed to be actual bales 101. The terminology "apparent bale" does not mean that any sort of initial discrimination of objects 101 in field 101 has occurred, in terms of drawing a preliminary conclusion that the object 101 resembles a bale 101 within certain margins of error (though this is within the scope of the present invention); this terminology only means that an object 101 has been detected, and this object 101 may or may not be a bale 101 of crop material in field 100. The terms "object," "apparent bale," "bale" can be used interchangeably herein, unless otherwise distinguished; the primary distinction is that "object" and "apparent bale" have not yet been confirmed to be actual bales 101 of crop material by way of the present invention, though objects 101 that have not yet been confirmed to be bales 101 can be referred to as bales 101 herein. Accordingly, sensor apparatus 103 can be configured to be indiscriminate in the objects that it senses, in terms of ascertaining location data of the objects 101 and taking images of the objects 101 for subsequent processing, such as identification as to whether the object 101 is or is not an actual bale 101 of crop material. Alternatively, as a second option, sensor apparatus 103 can be configured to perform at least an initial discrimination of objects 101, such that sensor apparatus 103 discriminates relatively generally so as to capture all bale-like objects (capturing all bales 101, as well as other objects that are not bales but tend to resemble bales 101), and a subsequent data processing operation can make a final determination whether the given object 101 is indeed a bale 101 of crop material. According to this alternative, a controller 114 of sensor apparatus 103, or controller 104, can perform this initial, non-final discrimination step. Thus, sensor apparatus 103 can include a way for a user to establish settings of sensor apparatus 103, such as by way of an input device (i.e., 450) on sensor apparatus 103 itself, or remotely by way of any device (such as controller 104) operatively coupled with controller 114 of sensor apparatus 103. Such settings can include a maximum and/or minimum range (distance) to objects 101, and approximate shape and size of the objects 101 which might be bales 101. For instance, a user can input whether the bales are round bales, large square bales, or small square bales. If the bales are round bales, the approximate size can be input, including diameter and length of the bale. Further, the user could set the margin of error, such as a ten to ninety percent deviation from the inputted size dimensions (a higher percentage and thus higher margin of error would allow for faster processing times in field 100). Within a margin of error, controller 114 of sensor apparatus 103 can discriminate between objects based upon such settings. Similarly, settings input information with respect to large or small square bales can include an approximate length, width, and height of the bale. Alternatively, as a third option, sensor apparatus 103 can be configured to perform a final discrimination of objects 101 (whether objects 101 are bales 101 of crop material or not) while sensor apparatus 103 is still set up in field 100. Like with the second option, this third option can include user inputting settings with respect to the bales 101, but with a smaller margin of error, such as a two percent deviation. Controller 114 of sensor apparatus 103 can include image processing capabilities like that discussed below performed by a controller 104, which is not a part of sensor apparatus 103. Alternatively, with respect to this third option, controller 104, rather than controller 114, can perform this final discrimination, while sensor apparatus 103 is still in field 100. What is assumed herein is that the first or second option is used, and that the final determination as to whether an object 100 is a bale 101 of crop material or not is performed apart from sensor apparatus 103 and off-site from field 100, such as by a user or by image processing software, as discussed below.

Sensor apparatus 103 can include, in accordance with an exemplary embodiment of the present invention, a base 105, a trunk 106, and a head 107 (which can be referred to as a sensor head), as shown schematically in FIG. 1. Each of base 105, trunk 106, and head 107 are coupled with one another, with base 105 forming a bottom section of sensor apparatus 103 and being configured for being in contact with the ground (directly or indirectly) during operation of sensor apparatus 103 (in this sense, sensor apparatus 103 is a land-based apparatus), trunk 106 forming a middle section of sensor apparatus 103, and head 107 forming a top section of sensor apparatus 103. Further, sensor apparatus 103 can include a position determining device such as a Global Positioning System (GPS) device 108, which can be located anywhere on sensor apparatus 103, such as being a part of head 107. Further, head 107 can include one or more sensors 109, 110, 111, 112, 113, a self-leveling device 116, a directional device 117, and a controller 114 (or, alternatively, a storage device in place of controller 114). Head 107 does not necessarily include all of these structures 109-114, 116, 117, but can include them. Sensor 109 can be a radar device, sensor 110 can be a lidar device, and sensor 111 can be a camera, such as a high-resolution camera, such as a high-resolution stereo camera. Radar device 109 can scan field 100, using radar technology (which is well known), for objects, such as bales 101, so as to detect a distance of object 101 relative to sensor apparatus 103. Similarly, lidar device 110 can scan field 100, using lidar technology (which is well known), for objects, such as bales 101, so as to detect the distance of object 101 relative to sensor apparatus 103. Similarly, camera device 111 can scan field 100, using high-resolution stereo camera technology (which is well known), for objects, such as bales 101, so as to detect the distance 225 (straight line distance 225) of object 101 relative to sensor apparatus 103. Thus, radar device 109, lidar device 110, and/or camera device 111 are configured for detecting distance 225 to the apparent bale 101 from radar device 109, lidar device 110, and/or camera device 111. This distance 225 between sensor 109, 110, and/or 111 and object 101 is explained more fully below. Further, sensor 112 can be an angular position sensor configured to detect a vertical angle 226 with respect to a horizontal reference line 229 associated with sensor head 107. That is, sensor apparatus 103, by way of angular position (vertical) sensor 112, can measure a vertical angular relationship of object 101 with respect to horizontal line 229. More specifically, sensor(s) 109, 110, 111 can tilt upwards or downwards so as to form a straight line 218 to object 101, such that line 218 forms angle 226 with horizontal line 229. Further, sensor 113 can be an angular position sensor configured to detect a horizontal angle 331 with respect to a reference line 332 associated with sensor apparatus 103. That is, sensor apparatus 103, by way of angular position (horizontal) sensor 113, can measure a horizontal angular relationship of object 101 with respect to reference line 332. Further, self-leveling device 116 can be any suitable self-leveling device, which can keep housing 219 of sensor head 107, and/or sensors 109-113, and/or devices 108, 117, level when legs 220 are placed on unlevel ground (or structure beneath legs 220 is unlevel), so that reference line 229 remains horizontal (level), in order to be able to obtain an accurate vertical angle 226. Further, according to an optional embodiment of the present invention, sensor head 107, and/or sensors 109-113, can pivot up and down about axis of rotation 228 as necessary (such as to peer behind near objects). To the extent that sensor head 107 and/or sensors 109-113 are pivoted about axis 228, self-leveling device 116 can be configured such that reference line 229 remains horizontal (level), in order to be able to obtain an accurate vertical angle 226. Thus, self-leveling device 116 is configured for providing a level reference line 229. Directional device 117 can be any suitable device for determining an angular direction to which any of sensors 109, 110, 111 and/or sensor head 107 is pointing, relative to, for instance, magnetic north (controller 104, 114, for instance, can be updated periodically to account for any change of location of magnetic north), and conversions can be made relative to magnetic north, grid north, and true north by controller 104, 114 using a grid magnetic angle, a magnetic declination angle, and/or a grid convergence angle, as appropriate (adjustments can be made by way of controller 104, 114 when the present invention is used in the southern hemisphere). Directional device 117 can be a compass (such that zero degrees of directional device 117 formed as a compass 117 points to magnetic north), and/or can be part of or associated with GPS device 108.

In sum, agricultural bale detection system 102 incudes sensor apparatus 103, which is land-based and includes base 105 and at least one sensor 109-111 coupled with base 105, base 105 being configured for being temporarily placed in a stationary position on a ground (directly or indirectly) of field 100 when the at least one sensor 109-111 is operating by scanning field 100, the at least one sensor 109-111 being configured for operating and thereby for: detecting an operative parameter of at least one object 101 in field 100, the operative parameter being associated with a location of object 101 in field 100; and outputting an operative parameter signal corresponding to the operative parameter. Base 105 does not have to be directly in contact with the ground of field 100 to be positioned on the ground; rather, a mat, a tarp, any sort of support, or even a mobile device or vehicle can be directly underneath base 105, such that base 105 is on the ground, at least indirectly, though it is assumed herein that base 105 is directly on the ground of field 100, unless otherwise stated. Further, the operative parameter can be: a straight line distance 225 detected by at least one of sensors 109, 110, 111 to bale 101; vertical angle 226 as detected by angular position (vertical) signal 112; and/or horizontal angle 331 as detected by angular position (horizontal) signal 113.

Control system 115 includes sensors 109, 110, 111, 112, 113, sensor head controller 114, self-leveling device 116 (or, alternatively, a sensor associated with self-leveling device which can be in communication with controllers 104, 114), directional device 117, and also controller 104. Controller 104 is operatively coupled with sensors 109, 110, 111, 112, 113, sensor head controller 114, self-leveling device 116, and directional device 117. Similarly, controller 114 is operatively coupled with sensors 109, 110, 111, 112, 113, sensor head controller 104, self-leveling device 116, and directional device 117. Controller 104 can be physically spaced apart from, and, indeed, remote from, sensor apparatus 103. Controller 104 is assumed to be the primary controller relative to controller 114 herein; however, controller 114 can be the primary controller relative to controller 104. Controllers 104, 114 can be configured to perform any or all of the same or substantially similar functions of either controller 104, 114. Further, controllers 104, 114 can be in communication with one another, such that any or all information associated with either controller 104, 114 can be shared with the other controller 104, 114, and either controller 104, 114 can perform the functions of the other controller 104, 114. Controller 104, 114 is configured for: receiving the operative parameter signal; determining a position of object 101 (which may or may not have yet been identified as bale 101 of crop material) based at least in part on the operative parameter signal; and, optionally, determining whether object 101 is a bale 101 of crop material (alternatively, this could be done by a user, instead of controller 104, 114)(as discussed below). Further, controller 104 can be included in any suitable device, such as a smartphone, a tablet, a phablet, a laptop computer, a desktop computer, a touchpad computer, touchscreen device and/or a cloud-based computing system including a data center. Further, controller 104, while spoken of in the singular, can include a plurality of such devices. Controller 104 can be operatively coupled with, so as to communicate with, sensors 109, 110, 111, 112, 113, sensor head controller 114, self-leveling device 116, and directional device 117 in any suitable manner, such as a wired connection or a wireless connection, such as radio signals (RF), light signals, acoustic signals, cellular, WiFi, Bluetooth, Internet, via cloud-based devices such as servers, and/or the like. Controllers 104, 114 can be a part of any network facilitating such communication therebetween, such as a local area network, a metropolitan area network, a wide area network, a neural network, whether wired or wireless.

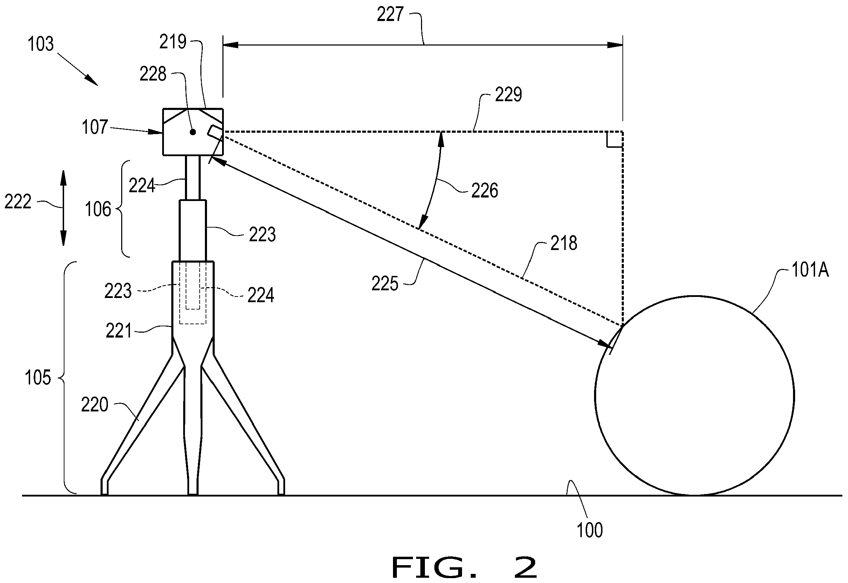

Referring now to FIG. 2, there is shown schematically a side view of sensor apparatus 103 and bale 101 formed as a round bale in field 100 (taken from the right side of FIG. 1). As indicated above, sensor apparatus 103 includes base 105, trunk 106, and head 107 (base 105, trunk 106, and head 107 forming three stages of sensor apparatus 103), according to an exemplary embodiment of the present invention; sensor apparatus 103 can include more or less than three stages, and all, or less than all, of the stages can be formed to be telescoping relative to one another. FIG. 2 shows that base 105 can include a plurality of legs 220 and a waist 221, according to an exemplary embodiment of the present invention. Legs 220 can include three such legs 220 and are configured for supporting a remainder of sensor apparatus 103 on the ground of field 100. Waist 221 can include a way to receive at least a portion of trunk 106 therein, so that trunk 106 can telescope with respect to waist 221, with the result that head 107 can be raised lowered with respect to waist 221, as indicated by double-arrow 222. Trunk 106 includes a first (lower) segment 223 and a second (upper) segment 224 coupled with one another and with waist 221 of base 105. More specifically, lower segment 223, when trunk is fully extended (as shown in FIG. 2), is adjacent to waist 221, and upper segment 224 is adjacent to head 107. Trunk 106 is configured for being telescoping. For example, lower segment 223 can be configured for being received (retracted/collapsed) entirely within waist 221, as indicated by broken lines in FIG. 2. Further, lower segment 223 and upper segment 224 can be configured such that upper segment 224 can be received (retracted/collapsed) within lower segment 223. Sensor head 107 can include a housing 219 which houses therein all of components 109-114, 116, 117. Sensor apparatus 103 can be configured of any suitable material, such as steel, a plastic, carbon fiber, and/or mixtures thereof; the material enables sensor apparatus 103 to be sturdy yet light in weight enough to be carried, at least in parts, by a human being. Sensor apparatus 103 can be configured to be foldable in parts (such as legs 220) and, with trunk 106 being telescoping, sensor apparatus 103 can be made compact so as to be readily carried, stored, and transported. Alternatively, or in addition thereto, sensor apparatus 103 can be assembled and disassembled in normal operation, such that sensor apparatus 103 can be field assembled and disassembled, that is, assembled in field 100 in order to conduct the bale detection operation of sensing apparatus 103, and disassembled in field 100 when the bale detection operation of sensing apparatus 103 is completed. In this way, sensor apparatus 103 can be carried to a selected location in field 100, either by a human being or by way of a device, such as any sort of work vehicle, such as a truck or tractor with a driver in a cab of the truck or tractor, or by an autonomous work vehicle.

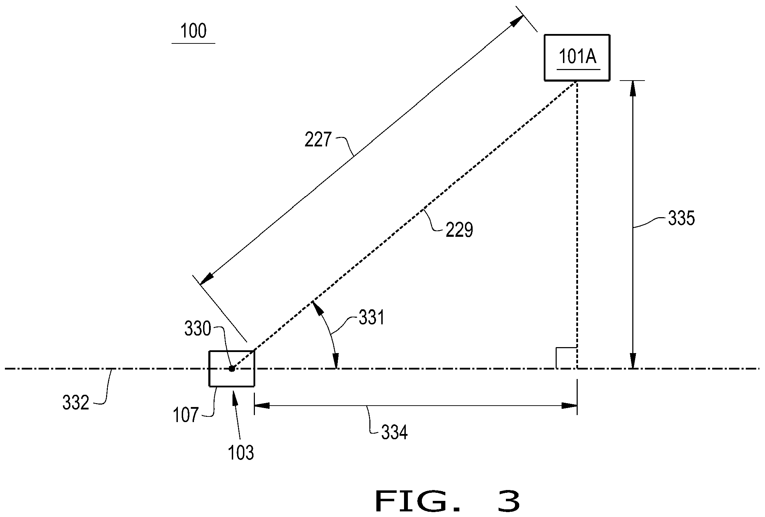

As further shown in FIG. 2, sensor apparatus 103 is configured for measuring straight line distance 225 from sensor apparatus 103 to bale 101, more specifically, from any of the sensors of head 107. As indicated above, any of sensors 109, 110, 111 can be used to detect straight line distance 225 (that is, the range) of line 218 extending from sensors 109, 110, 111 to bale 101 (it can be appreciated that sensor head 107 need not include or use all of sensors 109-111 when sensing straight line distance 225), though sensor 109 and/or 110 can be primarily responsible for this function. Line 218 and line 229 (positioned directly above line 218, in FIG. 2) are situated at an angle relative to sensor apparatus 103 and bale 101A; more specifically, given that FIG. 2 is a right side view of what is shown in FIG. 1, sensor apparatus 103 is positioned in the background of FIG. 2, and bale 101A is positioned in the foreground of FIG. 2, with the result that the left end of lines 218 and 229 are in the background of FIG. 2 relative to the right end of lines 218, 229 (this is best seen in FIG. 3 with respect to line 229, line 218 implicitly being directly below line 229 in FIG. 3). Further, sensors 110, 111 can be used to take an image of the apparent bale 101, though sensor 111 can be primarily responsible for this function. Sensors 109, 110, 111 are configured for respectively outputting this data (straight line distance 225, and the image) to controller 104 (and/or to controller 114 of sensor apparatus 103). Further, angular position (vertical) sensor 112 is configured for sensing a vertical angle 226 that line 218 extending from a respective sensor 109, 110, 111 to bale 101A makes with horizontal reference line 229 (such as from self-leveling device 116), when sensor 109, 110, 111 detects straight line distance 225 to bale 101, and for outputting vertical angle 226 to controller 104. Once controller 104 receives this data (straight line distance 225, vertical angle 226, and the image), controller 104 (and/or controller 114) processes this data so as to determine the position of object 101 in field 100 and to determine whether the image is actually that of a bale 101 (as opposed to, for example, a large rock, or a mound of soil). In determining this position of bale 101, controller 104 can be configured to calculate horizontal distance 227, which is an x-component associated with straight line distance 225. Knowing straight line distance 225 and vertical angle 226, horizontal distance 227 can be calculated as follows: horizontal distance 227 = (straight line distance 226) * (cos (angle 226)). Further, the direction to which any of sensors 109, 110, 111 and/or sensor head 107 is pointing can be obtained by directional device 117 and/or GPS device 108. Thus, using GPS coordinates of sensor apparatus 103 as a fixed and known point by way of GPS device 108, the direction to which sensor(s) 109, 110, 111 and/or sensor head 107 is pointing, and horizontal distance 227, a GPS location can be assigned to object 101A and the position of object 101A can be: (a) plotted on a map of field 100 (assuming each object 101 is recognized as an actual bale 101 of crop material), such as a contour map by way of controller 104, which is configured for generating a bale location map 452 of all of bales 101 in field 100 based at least in part on these factors, which indicate a position of bale 101; and/or (b) inserted into a table providing the GPS location of each bale 101 in field 100, by way of controller 104, which is configured for generating a bale location table 453 of all of bales 101 in field 100. The map of bale 101 locations and/or the table of bale 101 locations can thus be generated and outputted by controller 104. These calculations alone, discussed in reference to FIG. 2, thus, can be used to determine the position of bale 101 in field 100, according to one embodiment of the present invention. Thus, what is shown and described with respect to FIG. 3 can supplement and serve to provide further positional precision with respect to what is shown and described regarding FIG. 3. Alternatively, the directional information of directional device 117 may not be used; in that case, what is shown and described with reference to FIG. 3 to obtain the positions of objects 101 in field 100. Further, as described herein, sensor head 107 and/or sensors 109-113 can pivot horizontally and vertically when scanning for bales 101. However, FIG. 2, for illustrative purposes, shows sensor head 107 facing directly to the right of the page in FIG. 2 (and thus directly to the top of the page in FIG. 1), not directly at bale 101A, as might be expected. It can be appreciated, however, that in actual use, sensor head 107 can be pivoted so as to face directly at bale 101A (which would show more of a frontal view of sensor head 107 in FIG. 2). On the other hand, sensor head 107 can have a generally transparent lens with respect to any of sensors 109-113, so that sensors 109-113, for example, can pivot horizontally and vertically so as to face directly at bale 101A, without the need for sensor head 107 to pivot and face directly towards bale 101A.

Referring now to FIG. 3, there is shown a top view of field 100 similar to FIG. 1, but focused in on sensor apparatus 103 and object/bale 101A, similar to FIG. 2. Sensor head 107, and/or one or more of the sensors (i.e., 109, 110, 111) in sensor head 107, can rotate, in either direction, about an axis of rotation 330. Sensor head 107, and/or the sensors in sensor head 107, can pivot in this manner any angular amount, such as a full 360 degrees, or less. Thus, for example, sensor head 107 can rotate about axis of rotation 330 as sensor(s) 109, 110, 111 scans field 100. Upon encountering an apparent bale 101 within its field of view during rotation of sensor head 107, sensor(s) 109, 110, 111 can measure straight line distance 225 (as shown in FIG. 2), and sensor(s) 110, 111 can take an image (picture) of apparent bale 101. This straight line distance 225 and image can be sent to controller 104. Further, employing the discussion in reference to FIG. 2, this straight line distance 225 can be used with vertical angle 226 to obtain horizontal distance 227 by controller 104. Because FIG. 3 shows a top view, both lines 218 and 229 correspond with one another, though only line 229 is labeled in FIG. 3. So, as with reference to FIG. 2, straight line distance 225 is used to calculate horizontal distance 227, which is used in conjunction with FIG. 3. Further, just as angular position (vertical) sensor 112 can detect vertical angle 226 with respect to reference line 229 (FIG. 2), so also angular position (horizontal) sensor 113 can detect a horizontal angle 331 relative to reference line 332. Reference line 332 is a set reference line with respect to angular position of sensor apparatus 103 and/or sensors 109-113, this reference line 332 being set either by the manufacturer of sensor apparatus 103 or by the user. Reference line 332 can be set in angular position (horizontal) sensor 113, controller 104, and/or controller 114. For instance, reference line 332 can be set to be a line extending between 270 degrees and 90 degrees of a circle, as indicated in FIG. 3 (with zero degrees pointing directly to a 12 o'clock position in the page of FIG. 3). This circular orientation can, optionally, be set in conjunction with directional device 117 and/or GPS device 108, such that zero degrees of a reference circle is aligned with, for example, magnetic north.

Regardless of how reference line 332 is set, angular position (horizontal) sensor 113 can measure the angle 331 between reference line 332 and horizontal line 229 extending from sensor(s) 109, 110, 111 in the horizontal direction of bale 101A. This horizontal angle 331 is provided to controller 104. Thus, once controller 104 calculates horizontal distance 227, controller 104 can further calculate an x-component distance 334 and a y-component distance 335. X-component distance 334 can be calculated as follows: (horizontal distance 227) * (cos (horizontal angle 331)). Y-component distance 335 can be calculated as follows: (horizontal distance 227) * (sin (horizontal angle 331)). Thus, in multiple ways, the position of bale 101A can be determined, when knowing the GPS position of sensor apparatus 103. First, this can be accomplished as noted above with reference to FIG. 2. Second, upon calculating horizontal distance 227, this can be used in conjunction with horizontal angle 331 relative to reference line 332 to plot the position of bale 101 relative to sensor apparatus 103 and thereby to generate a bale location map 452 and/or bale location table 453 for each bale 101 in field 100. Third, upon calculating horizontal distance 227, x-component distance 334 and y-component distance 335 can be calculated, and the position of bale 101A can be plotted in field 100 relative to the GPS position of sensor apparatus 103. Further, this determination of the position of bale 101 can be determined for each bale 101 in field 100 and translated into a GPS location for each bale 101, so as to generate the bale location map 452 and/or bale location table 453 for field 100 (assuming each apparent bale 100 is recognized as an actual bale 100 of crop material). In developing this map 452, an underlying contour map can be used (such maps can be obtained from publicly available sources), and the bale locations can be plotted onto such a map, according to one embodiment of the present invention. Bale location map 452 and/or bale location table 453 can be used, for instance, as input data by an autonomous bale retriever in a subsequent bale retrieving operation to locate bales 101 in field 100.

Further, as indicated above, the apparent bale 101 needs to be formally recognized as an actual bale 101. At least two ways are provided in accordance with the present invention. That is, an image(s) of bale 101 (such as bale 101A) can be taken by sensor 110, 111 and outputted to controller 104. Upon receiving such an image (for simplicity, image is used in the singular, though it will be appreciated that a plurality of images of the same apparent bale 101 can be processed), controller 104 can output the image to a printer or to a display screen 451, or submit the image for image processing by software. Regarding the former, the image is provided so that a user can view the image. When viewing the image, a user can make a determination and thereby sort as to whether the apparent bale 101 is an actual bale 101 of crop material. Regarding the latter, rather than a user, computer software, as in controller 104 and/or 114, makes the determination using image processing software. That is, the image of the apparent bale 101 is compared by controller 104 and/or 114 to a standard to determine whether the apparent bale 101 is an actual bale 101 of crop material. For example, the image can be compared to a known bale of crop material. For instance, when making initial settings, user can input into controller 104 (and/or controller 114) the type of bale, i.e., round bale, large square bale, or small square bale. If a round bale is selected, then the average diameter and length of the bale can be inputted for purposes of comparison. If a square bale is selected, the average length, width, and height of the square bale can be inputted for purposes of comparison. Alternatively or in addition thereto, a picture can be taken of one or more bales in field 100 (with any suitable device, such as a smartphone) just prior to conducting the bale detection operation by sensor apparatus 103, and this image from the smartphone of an actual bale 101 in field 101 can be uploaded into controller 104 and/or 114 as a standard by which to compare the image taken during the bale detection operation by sensor apparatus 103. Further, other suitable parameters can be used, alternatively or in addition thereto, by which to compare the image from sensor apparatus 103. With any suitable standard, a margin of error (a deviation from the standard) can be assigned. Thus, controller 104, 114 is configured for determining whether the object 101 is a bale 101 of the crop material based at least in part on the image. Upon making this determination, the map 452 and/or table 453 of actual bales 101 in field 100 can be generated by controller 104 and/or 114.

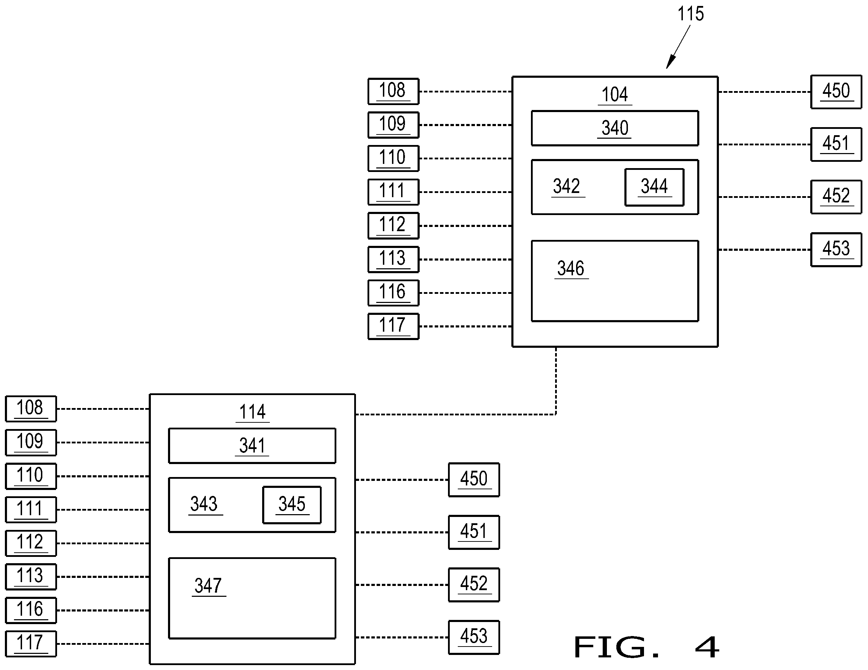

Referring now to FIG. 4, there is shown a schematic diagram of control system 115. That is, control system includes GPS device 108, sensors 109-113, self-leveling device 116, directional device 117, input device 450, output device 451, and controllers 104, 114. GPS device 108, angular position sensors 112, 113, self-leveling device 116, directional device 117 primarily provide inputs to controllers 104, 114. Sensors 109, 110, 111 can provide both inputs to controllers 104, 114 and receive inputs from controllers 104, 114. In terms of receiving inputs from controllers 104, 114, controllers 104, 114 can be directed, for instance, by user or otherwise programmed to move and thereby to scan sensors 109, 110, 111 360 degrees around field 100, and also in a vertical orientation (upwards and downwards), scanning for objects 101. Further, user can use input device 405 to input settings and/or commands to controllers 104, 114; such an input device 405 can include, for example, a keypad, a touchpad, or a touchscreen. Further, user can view any information from controllers 104, 114 by way of an output device 451, which can be a display screen, for example.

Further, in general, controller 104, 114 may each correspond to any suitable processor-based device(s), such as a computing device or any combination of computing devices. Each controller 104, 114 may generally include one or more processor(s) 340, 341 and associated memory 342, 343 configured to perform a variety of computer-implemented functions (e.g., performing the methods, steps, algorithms, calculations and the like disclosed herein). Thus, each controller 104, 114 may include a respective processor 340, 341 therein, as well as associated memory 342, 343, data 344, 345, and instructions 346, 347, each forming at least part of the respective controller 104, 114. As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the respective memory 342, 343 may generally include memory element(s) including, but not limited to, computer readable medium (e.g., random access memory (RAM)), computer readable non-volatile medium (e.g., a flash memory), a floppy disk, a compact disc-read only memory (CD-ROM), a magneto-optical disk (MOD), a digital versatile disc (DVD), and/or other suitable memory elements. Such memory 342, 343 may generally be configured to store information accessible to the processor(s) 340, 341, including data 344, 345 that can be retrieved, manipulated, created, and/or stored by the processor(s) 340, 341 and the instructions 346, 347 that can be executed by the processor(s) 340, 341. In some embodiments, data 344, 345 may be stored in one or more databases.

In use, according to an exemplary embodiment of the present invention, after a baling operation has already been conducted and bales 101 of crop material are spread out on field 100, and prior to conducting a bale retrieval operation, a user can conduct a bale detection operation using agricultural bale detection system 102. In so doing, user can transport (such as by carrying and walking, or via a vehicle) sensor apparatus 103 to a selected location in field 100 and set up sensor apparatus 103 in order to conduct the bale detection operation. To do so, legs 220 can be placed directly on the ground of field 100, or indirectly on the ground with an object(s) between legs 220 and the ground; such an object(s) can be, for example, a ground covering, a platform, a vehicle, or any suitable structure(s), so as to provide stability, transport, and/or mounting of sensor apparatus 103 (for instance, sensor apparatus can be transported to field 100 on a vehicle, set up on the vehicle (or be attached to the vehicle, or be a part of a scanning vehicle), and conduct the scanning while still on the vehicle). Sensor head 107 can be raised to the desired height by way of telescoping trunk 106. Further, user can enter initial settings into controller 104 and/or 114, if so desired. Such initial settings can include the type of bale 101 in field 100 (round, square), dimensions of bales 101, a picture of an average bale 101 in field 100, a maximum and minimum range in which to scan by sensor apparatus 103, as well as a degree of rotation of sensor head 107 about axis 330, i.e., a full 360 degrees, or something less, and if less, a specific range of degrees in which to scan, such as 270 degrees (relative to magnetic north, for instance) to 140 degrees (by way of zero degrees), as well as a degree of rotation of sensor head 107 and/or sensors 109-113 about axis 228. User can enter a command into controller 104, 114 to begin the scan (such as by way of input device 450). The scan of field 100 occurs while sensor apparatus 103 is stationary in (or near) field 100. During or after the scan, sensor apparatus 103 sends data collected by GPS device, sensors 109-113, self-leveling device 116, and/or directional device 117 to at least one of controllers 104, 114, in order to make calculations, to perform image processing (alternatively, the image processing can be performed by user, rather than software), and to generate bale location map 452 and/or bale location table 453. Such calculations and image processing can be performed before or after sensor apparatus 103 is removed from field 100 upon completion of the scanning. Bale location map 452 and/or bale location table 453 (each of which includes the GPS coordinates of each bale 101) can then be provided to a bale retrieving device, such as an autonomous bale retriever, which can then go into field 100, using this map 452 and/or table 453 and retrieve bales 101. The bale retriever can employ its GPS device to correspond its GPS coordinate location traversing field 100 to the GPS coordinate locations of each bale 101.

The scanning of field 100 for bales 101 and the image processing can occur separately. That is, sensors 109 (radar) and 110 (lidar) are used as the primary sensors for locating objects 101 in field 100. These sensors 109, 110 are accompanied by high-resolution camera 111 (as discussed), which can be the primary device for taking images/pictures (either as discrete images, or as a continuous video stream) of field 100, namely, of the objects 101 that have not yet been identified as bales 101. According to one embodiment of the present invention, a final determination as to whether the objects 101 are bales 101 can occur off-site, that is, out of field 101; this final determination (sorting objects into categories of being a bale 101 or not a bale 101 of crop material) can done by a user (such as by viewing a display 451 with images of the objects 101) or by image processing software that is able to identify whether the object 101 is a bale 101 or not a bale 101. Thus, sensor apparatus 103 would send object 101 location data (controller 104 and/or 114 having already determined the GPS coordinates of object 101) to controller 104 for off-board or off-site (off of field 100) object identification (that is, making a final determination as to whether object 101 is or is not bale 101). According to another embodiment of the present invention, the final determination as to whether objects 101 are bales 101 can occur on-site, that is, in field 101. This final determination can be done by the user in the field (for example, the user can look at a picture of an object 101 and determine whether it is an actual bale 101) or by image processing software that is able to identify whether object 101 is a bale 101. Controller 114 can do all of this processing, without the involvement of controller 104, while user is still in field 101; alternatively, controller 104 can do some or all of this processing, while user is still in field 101. Thus, the image processing does not have to be done off board, but can be done on board. In this sense, the image processing is done in real-time, by either the user or image processing software of controller 104 and/or 114. If the image processing is done in real-time (by either user or computer), the user or controller 104, 114 could request/command the appropriate sensor(s) 109, 110, 111 (for example, sensor(s) 110, 111) to re-picture (take another picture) of apparent bale 101 (this apparent bale 101 may already be on a list within either controller 104, 114, such as within table 453), in order to make a firmer determination as to whether apparent bale 101 is an actual bale 101. That is, for example, camera 111 may use a different zoom (i.e., zoom in closer on apparent bale 101) when taking another picture, so as to be able to get a closer look at apparent bale 101, in order to help better identify whether or not apparent bale 101 is an actual bale 101, if this is unclear. Further, either the user, respective sensor(s) 110, 111, and/or controller(s) 104, 114 can control the degree of zoom that occurs. For instance, user can view the images already taken and can input a certain amount of zoom to camera 111, for instance, on a subsequent picture to be taken. Alternatively, for example, camera 111 or controller 114 can automatically control the amount of zoom either on an initial picture taken of object 101, and/or on a retake of the picture of object 101. In so doing, object 101 in the image can be automatically controlled to be a specified size in an image field. For example, the specified size can be such that the identified potential bale 101 can take up at least 50 percent of an image when the picture is submitted for processing, either by a human being (the user, for instance) or by a computer (image processing software in controller 104 and/or 114). Specifying this size can be done before the picture of object 101 is taken (initially) or after the picture is taken (for a re-take).

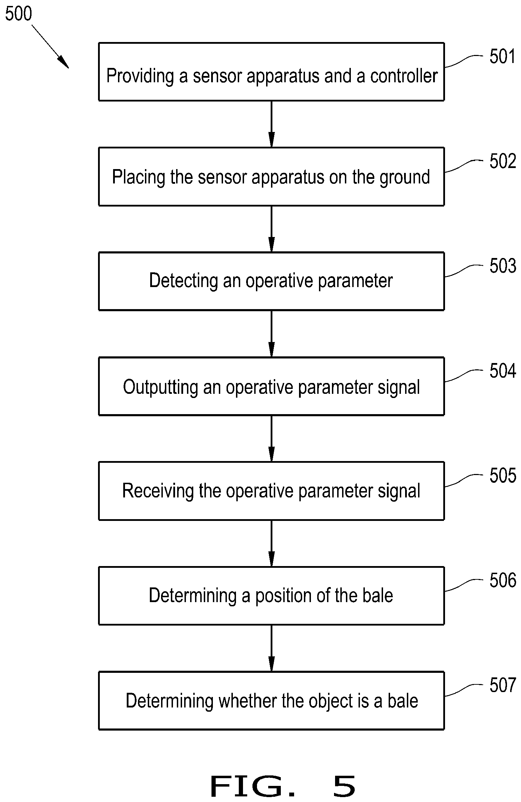

Referring now to FIG. 5, there is shown a flow diagram of a method 500 of using an agricultural bale detection system 102. The method 500 includes the steps of: providing 501 a sensor apparatus 103 and a controller 104, 114, the sensor apparatus 103 being land-based and including a base 105 and at least one sensor 109, 110, 111 coupled with the base 105, the controller 104, 114 being operatively coupled with the at least one sensor 109, 110, 111; placing 502 temporarily the base 105 of the sensor apparatus 103 in a stationary position when the at least one sensor 109, 110, 111 is operating; detecting 503, by the at least one sensor 109, 110, 111, an operative parameter of at least one object 101 of a crop material in a field 100, the operative parameter being associated with a location of the object 101 in the field 100; outputting 504, by the at least one sensor 109, 110, 111, an operative parameter signal corresponding to the operative parameter; receiving 505, by the controller 104, 114, the operative parameter signal; and determining 506, by the controller 104, 114, a position of the object 101 based at least in part on the operative parameter signal. The sensor apparatus 103 can further include a trunk 106 coupled with the base 105, the base 105 including a plurality of legs 220, the trunk 106 being telescoping. The operative parameter includes a distance 225 to the object 101. The at least one sensor 109, 110, 111 includes at least one of a radar device 109, a lidar device 110, and a camera device 111. The method 500 can further include the steps of: detecting, by at least one of the radar device 109, the lidar device 110, and the camera device 111, the distance 225 to the object 101; and taking, by at least one of the lidar device 110 and the camera device 111, an image of the object 101 in order to determine whether the object 101 is the bale 101 of the crop material. The method 500 can further include the steps of: determining 507, by the controller 104, 114, whether the object 101 is the bale 101 of the crop material based at least in part on the image; and generating, by the controller 104, 114, a bale location map 452 and/or a bale location table 453 based at least in part on the position of the object 101.

It is to be understood that the steps of method 500 are performed by controller 104, 114 upon loading and executing software code or instructions which are tangibly stored on a tangible computer readable medium, such as on a magnetic medium, e.g., a computer hard drive, an optical medium, e.g., an optical disc, solid-state memory, e.g., flash memory, or other storage media known in the art. Thus, any of the functionality performed by controller 104, 114 described herein, such as the method 500, is implemented in software code or instructions which are tangibly stored on a tangible computer readable medium. The controller 104, 114 loads the software code or instructions via a direct interface with the computer readable medium or via a wired and/or wireless network. Upon loading and executing such software code or instructions by controller 104, 114, controller 104, 114 may perform any of the functionality of controller 104, 114 described herein, including any steps of the method 500.

## Claims

1. A sensor apparatus (103) of an agricultural bale detection system (102), the sensor apparatus (103) comprising:
a base (105); and
at least one sensor (109, 110, 111) coupled with the base (105), the sensor apparatus (103) being land-based,
wherein the base (105) is configured for being temporarily placed in a stationary position when the at least one sensor (109, 110, 111) is operating, the at least one sensor (109, 110, 111) being configured for:
detecting an operative parameter of at least one object (101) in a field (100), the operative parameter being associated with a location of the object (101) in the field (100); and
outputting an operative parameter signal corresponding to the operative parameter, such that a controller (104, 114), which is operatively coupled with the at least one sensor (109, 110, 111), receives the operative parameter signal and determines a position of the object (101) based at least in part on the operative parameter signal.

2. The sensor apparatus (103) of claim 1, wherein the sensor apparatus (103) further includes a trunk (106) coupled with the base (105), the base (105) including a plurality of legs (220), the trunk (106) being telescoping.

3. The sensor apparatus (103) of claim 2, wherein the operative parameter includes a distance (225) to the object (101).

4. The sensor apparatus (103) of claim 3, wherein the at least one sensor (109, 110, 111) includes at least one of a radar device (109), a lidar device (110), and a camera device (111).

5. The sensor apparatus (103) of claim 4, wherein at least one of the radar device (109), the lidar device (110), and the camera device (111) is configured for detecting the distance (225) to the object (101), and at least one of the lidar device (110) and the camera device (111) is configured for taking an image of the object (101) in order to determine whether the object (101) is a bale (101) of a crop material.

6. An agricultural bale detection system (102), comprising a sensor apparatus (103) as claimed in any preceding claim and being land-based.

7. An agricultural bale detection system (102) of claim 6 when dependent on claim 5, wherein the controller (104, 114) is configured for:
determining whether the object (101) is a bale (101) of the crop material based at least in part on the image; and
generating at least one of a bale location map (452) and a bale location table (453) based at least in part on the position of the object (101).

8. A method (500) of using an agricultural bale detection system (102), the method (500) comprising the steps of:
providing (501) a sensor apparatus (103), which is land-based and includes a base (105) and at least one sensor (109, 110, 111) coupled with the base (105),
wherein the step of providing further includes a controller (104, 114) which is operatively coupled with the at least one sensor (109, 110, 111);
placing (502) temporarily the base (105) of the sensor apparatus (103) in a stationary position when the at least one sensor (109, 110, 111) is operating;
detecting (503), by the at least one sensor (103), an operative parameter of at least one object (101) in a field (100), the operative parameter being associated with a location of the object (101) in the field (100);
outputting (504), by the at least one sensor (109, 110, 111), an operative parameter signal corresponding to the operative parameter;
receiving (505), by the controller (104, 114), the operative parameter signal; and
determining (506), by the controller (104, 114), a position of the object (101) based at least in part on the operative parameter signal.

9. The method (500) of claim 8, wherein the sensor apparatus (103) further includes a trunk (106) coupled with the base (105), the base (105) including a plurality of legs (220), the trunk (106) being telescoping, the operative parameter including a distance (225) to the object (101).

10. The method (500) of claim 9, wherein the at least one sensor (109, 110, 111) includes at least one of a radar device (109), a lidar device (110), and a camera device (111).

11. The method (500) of claim 10, wherein the method (500) further includes the steps of:
detecting, by at least one of the radar device (109), the lidar device (110), and the camera device (111), the distance (225) to the object (101); and
taking, by at least one of the lidar device (110) and the camera device (111), an image of the object (101) in order to determine whether the object (101) is a bale (101) of a crop material.

12. The method (500) of claim 11, wherein the method (500) further includes the steps of:
determining (507), by the controller (104, 114), whether the object (101) is the bale (101) of the crop material based at least in part on the image; and
generating, by the controller (104, 114), at least one of a bale location map (452) and a bale location table (453) based at least in part on the position of the object (101).
